(19) **Europäisches Patentamt / European Patent Office / Office européen des brevets**

(11) **EP 4 761 192 A1**

(12) **EUROPEAN PATENT APPLICATION**
published in accordance with Art. 153(4) EPC

(43) Date of publication:
**17.06.2026 Bulletin 2026/25**

(21) Application number: **24870240.9**

(22) Date of filing: **22.08.2024**

(51) International Patent Classification (IPC):
**H04L 25/02** $^{(2006.01)}$

(52) Cooperative Patent Classification (CPC):
**H04L 5/00; H04L 25/02**

(86) International application number:
**PCT/CN2024/114061**

(87) International publication number:
**WO 2025/066694 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.09.2023 CN 202311294651**

(71) Applicant: HUAWEI TECHNOLOGIES CO., LTD.
**Shenzhen, Guangdong 518129 (CN)**

(72) Inventors:
• **ZHANG, Xiaoyu**
  **Shenzhen, Guangdong 518129 (CN)**

• **SHI, Meng**
  **Shenzhen, Guangdong 518129 (CN)**
• **LIAO, Shuri**
  **Shenzhen, Guangdong 518129 (CN)**
• **YANG, Liu**
  **Shenzhen, Guangdong 518129 (CN)**
• **DOU, Shengyue**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **COMMUNICATION METHODS, APPARATUS, SYSTEM, CHIP, CHIP MODULE AND STORAGE MEDIUM**

(57) A communication method, an apparatus, a system, a chip, a chip module, and a storage medium. A network device pairs a plurality of terminals based on weight vectors corresponding to main transmission directions of the plurality of terminals, configures a matrix of a group of shared reference signal weights for the paired terminals, and transmits a reference signal to the paired terminals on a reference signal port group at a plurality of time instances based on the reference signal weight matrix, thereby implementing channel measurement for an NTN network and improving robustness of the channel measurement.

FIG. 7

## Description

This application claims priority to Chinese Patent Application No. 202311294651.1, filed with the China National Intellectual Property Administration on September 28, 2023 and entitled "COMMUNICATION METHOD, APPARATUS, SYSTEM, CHIP, CHIP MODULE, AND STORAGE MEDIUM", which is incorporated herein by reference in its entirety.

## TECHNICAL FIELD

This application relates to the field of communication technologies, and in particular, to a communication method, an apparatus, a system, a chip, a chip module, and a storage medium.

## BACKGROUND

A non-terrestrial network (non-terrestrial network, NTN) can simultaneously serve a plurality of terminals, with a satellite moving fast, a long transmission delay, and an obvious time-varying phenomenon of satellite channels.

In a new radio (new radio, NR) terrestrial system, a manner in which a base station obtains channel information is to send a channel state information-reference signal (channel state information-reference signal, CSI-RS) to a terminal. The terminal performs channel measurement based on the CSI-RS, and feeds back a precoding matrix indicator (precoding matrix indicator, PMI) that matches a channel state to the base station. However, PMI feedback in an NR scenario is mainly designed for a single-user channel, and is not related to channel feedback in a multi-user scenario. In addition, PMI feedback in the NR scenario is mainly based on an assumption of a dual-polarized antenna on a base station side. However, in an NTN scenario, the satellite generally uses left-hand circular or right-hand circular polarization. Therefore, an NR codebook does not adapt to the NTN scenario. Furthermore, because the satellite moves fast and the transmission delay is long, NR weight feedback is not robust enough when applied to the NTN scenario.

Space division multiplexing is usually employed between beams in a satellite system to improve resource utilization. Inter-beam interference gradually becomes obvious as a quantity of users increases, and a quantity of beams that satisfy isolation between beams in a space division beam group is also limited. As a result, an overall capacity of the satellite is limited and cannot increase linearly with the quantity of beams.

Therefore, in the NTN scenario, an urgent problem to be resolved is about how to perform channel measurement to improve robustness of the channel measurement.

## SUMMARY

This application provides a communication method, an apparatus, a system, a chip, a chip module, and a storage medium, to implement channel measurement for an NTN network and improve robustness of the channel measurement.

According to a first aspect, a communication method is provided. The method may be implemented by a first terminal or a chip or a circuit used in the first terminal.

The method includes: receiving a reference signal on a reference signal port group at a plurality of time instances based on a reference signal weight matrix corresponding to the reference signal port group, where the first terminal is any one of K terminals, the K terminals are grouped into a same group based on weight vectors corresponding to main transmission directions of the K terminals, the K terminals use a same reference signal port number group, K is a positive integer greater than or equal to 2, the reference signal weight matrix includes K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K. According to the method, channel measurement can be implemented for an NTN network, and robustness of the channel measurement can be improved. A network device pairs scheduled terminals in advance and designs the reference signal weight matrix for the paired terminals. In this manner, the terminal is enabled to simultaneously measure a target channel state of the terminal itself and an interference channel state of another terminal.

With reference to the first aspect, in a possible implementation, the method further includes: sending a channel measurement result, where the channel measurement result is based on a statistical average value of equivalent channels at the plurality of time instances, and the equivalent channels are channels estimated based on the reference signal. In this implementation, the terminal performs statistical averaging on reference signal reception channels at the plurality of time instances and computes a covariance matrix, so that the network device designs more robust multi-terminal low-interference transmission weights with better capacities.

According to a second aspect, a communication method is provided. The method may be implemented by a network device, or a chip or a circuit used in a network device.

The method includes: grouping K terminals into a same group based on weight vectors corresponding to main transmission directions of the K terminals, where the K terminals use a same reference signal port number group, and K is a positive integer greater than or equal to 2; obtaining a reference signal weight matrix corresponding to the reference signal port group, where the reference signal weight matrix includes K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K; and sending, by the network device, a reference signal to the K terminals on the reference signal port group at a plurality of time instances based on the reference signal weight matrix. According to the method, channel measurement can be implemented for an NTN network, and robustness of the channel measurement can be improved.

With reference to the second aspect, in a possible implementation, the method further includes: receiving channel measurement results from the K terminals.

With reference to the first aspect or the second aspect, in another possible implementation, correlation of the weight vectors corresponding to the main transmission directions of the K terminals is less than or equal to a first threshold; and/or isolation of the weight vectors corresponding to the main transmission directions of the K terminals is greater than or equal to a second threshold; and/or an interval between transmission angles of the main transmission directions of the K terminals is greater than or equal to a third threshold.

With reference to the first aspect or the second aspect, in still another possible implementation, equivalent channels of the $i^{th}$ terminal are associated with a first parameter, the first parameter is associated with the reference signal weight matrix and an array steering vector corresponding to a transmission direction, and the first parameter remains unchanged in the plurality of time instances.

With reference to the first aspect or the second aspect, in yet another possible implementation, the statistical average value is a covariance matrix, the channel measurement result includes amplitudes and phases of a plurality of elements in the covariance matrix, and values of the amplitudes of the plurality of elements are greater than or equal to a fourth threshold. In this implementation, the terminal performs statistical averaging on reference signal reception channels at the plurality of time instances, computes the covariance matrix, and feeds back some elements with high amplitudes in the covariance matrix. In this manner, with low feedback overheads, a base station is enabled to obtain transmission directions and direction weights of both a target channel and an interference channel, so that a satellite designs more robust multi-terminal low-interference transmission weights with better capacities.

With reference to the first aspect or the second aspect, in still yet another possible implementation, the statistical average value is a covariance matrix, the channel measurement result includes first $l'$ columns of vectors in a characteristic unitary matrix of the covariance matrix, and a port indication vector and a quantized port coefficient of each column of vectors in the $l'$ columns of vectors, $l'$ is a quantity of layers of a precoding matrix used for downlink transmission, and the quantity of layers is less than or equal to a rank of the covariance matrix. In this implementation, the terminal performs statistical averaging on CSI-RS reception channels at the plurality of time instances, computes the covariance matrix, and feeds back first several columns of the unitary matrix that is obtained following Eigen decomposition of the covariance matrix. In a case of maximizing reuse of an NR standard design, the network device is enabled to obtain transmission directions of both a target channel and an interference channel, so that a satellite designs more robust multi-terminal low-interference transmission weights, thereby improving a capacity of a single satellite as compared with a conventional satellite solution.

According to a third aspect, a communication apparatus is provided, and is configured to implement the communication method in any one of the first aspect or the implementations of the first aspect. The apparatus may be a terminal, or may be a module (for example, a processor, a chip, or a chip system) used in a terminal, or may be a logical node, a logical module, or software that can implement all or some functions of a terminal. In an implementation, the communication apparatus may include a sending unit and a receiving unit, and may further include a processing unit. The sending unit and the receiving unit may be independent of each other, or may be combined together (and then may be referred to as a "transceiver unit").

In a possible implementation, the communication apparatus includes modules configured to separately perform the method in any one of the first aspect or the implementations of the first aspect.

The transceiver unit is configured to receive a reference signal on a reference signal port group at a plurality of time instances based on a reference signal weight matrix corresponding to the reference signal port group, where the first terminal is any one of K terminals, the K terminals are grouped into a same group based on weight vectors corresponding to main transmission directions of the K terminals, the K terminals use a same reference signal port number group, K is a positive integer greater than or equal to 2, the reference signal weight matrix includes K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K.

Optionally, the transceiver unit is further configured to send a channel measurement result, the channel measurement result is based on a statistical average value of equivalent channels at the plurality of time instances, and the equivalent channels are channels estimated based on the reference signal.

According to a fourth aspect, a communication apparatus is provided, and is configured to implement the communication method in any one of the second aspect or the implementations of the second aspect. The apparatus may be a network device, or may be a module (for example, a processor, a chip, or a chip system) used in a network device, or may be a logical node, a logical module, or software that can implement all or some functions of a network device. In an implementation, the communication apparatus may include a sending unit and a receiving unit, and may further include a processing unit. The sending unit and the receiving unit may be independent of each other, or may be combined together (and then may be referred to as a "transceiver unit").

In a possible implementation, the communication apparatus includes modules configured to separately perform the method in any one of the second aspect or the implementations of the second aspect.

The processing unit is configured to group K terminals into a same group based on weight vectors corresponding to main transmission directions of the K terminals, where the K terminals use a same reference signal port number group, and K is a positive integer greater than or equal to 2. The processing unit is further configured to obtain a reference signal weight matrix corresponding to the reference signal port group, where the reference signal weight matrix includes K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K. The transceiver unit is configured to send a reference signal to the K terminals on the reference signal port group at a plurality of time instances based on the reference signal weight matrix.

Optionally, the transceiver unit is further configured to receive channel measurement results from the K terminals.

With reference to the third aspect or the fourth aspect, in an example, correlation of the weight vectors corresponding to the main transmission directions of the K terminals is less than or equal to a first threshold; and/or isolation of the weight vectors corresponding to the main transmission directions of the K terminals is greater than or equal to a second threshold; and/or an interval between transmission angles of the main transmission directions of the K terminals is greater than or equal to a third threshold.

With reference to the third aspect or the fourth aspect, in another example, equivalent channels of the $i^{th}$ terminal are associated with a first parameter, the first parameter is associated with the reference signal weight matrix and an array steering vector corresponding to a transmission direction, and the first parameter remains unchanged in the plurality of time instances.

With reference to the third aspect or the fourth aspect, in still another example, the statistical average value is a covariance matrix, the channel measurement result includes amplitudes and phases of a plurality of elements in the covariance matrix, and values of the amplitudes of the plurality of elements are greater than or equal to a fourth threshold.

With reference to the third aspect or the fourth aspect, in yet another example, the statistical average value is a covariance matrix, the channel measurement result includes first $l'$ columns of vectors in a characteristic unitary matrix of the covariance matrix, and a port indication vector and a quantized port coefficient of each column of vectors in the $l'$ columns of vectors, $l'$ is a quantity of layers of a precoding matrix used for downlink transmission, and the quantity of layers is less than or equal to a rank of the covariance matrix.

In another possible implementation, the communication apparatuses in the third aspect and the fourth aspect include a processor coupled to a memory. The processor is configured to enable the apparatus to perform corresponding functions in the foregoing communication method. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In still another possible implementation, the communication apparatuses in the third aspect and the fourth aspect include a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatuses in the third aspect and the fourth aspect are chips, the sending unit may be an output unit, for example, an output circuit or a communication interface, and the receiving unit may be an input unit, for example, an input circuit or a communication interface. When the communication apparatus is a terminal, the sending unit may be a transmitter or a transmitting machine, and the receiving unit may be a receiver or a receiving machine.

According to a fifth aspect, a computer-readable storage medium is provided. The computer-readable storage medium stores a computer program or instructions. When the computer program or the instructions are executed, the methods according to the foregoing aspects are implemented.

According to a sixth aspect, a computer program product including instructions is provided. When the instructions are run on a communication apparatus, the communication apparatus is caused to perform the methods according to the foregoing aspects.

According to a seventh aspect, a communication system is provided. The communication system includes the communication apparatus according to the third aspect or the communication apparatus according to the fourth aspect.

**BRIEF DESCRIPTION OF DRAWINGS**

FIG. 1 is a simplified diagram of a wireless communication system according to an embodiment of this application;
FIG. 2A is a diagram of an NTN scenario based on a transparent payload;
FIG. 2B is a diagram of an NTN scenario based on a regenerative payload;
FIG. 3 is a diagram of communication between a satellite base station and a terminal;
FIG. 4 is a diagram of a satellite channel;
FIG. 5 is a schematic flowchart of designing multi-terminal transmission weights in a terrestrial system;
FIG. 6 is a diagram of frequency division multiplexing;
FIG. 7 is a schematic flowchart of a communication method according to an embodiment of this application;
FIG. 8 is a diagram of terminal pairing;
FIG. 9 is a schematic flowchart of interaction over time between a network device and a terminal according to an embodiment of this application;
FIG. 10 is a schematic flowchart of terminal pairing based on angle prior information according to an embodiment of this application;
FIG. 11 is a diagram of a structure of a communication apparatus according to an embodiment of this application; and
FIG. 12 is a diagram of a structure of another communication apparatus according to an embodiment of this application.

**DESCRIPTION OF EMBODIMENTS**

The following describes embodiments of this application with reference to the accompanying drawings in embodiments of this application.

"At least one piece (item)" in this application below indicates one piece (item) or a plurality of pieces (items). A plurality of pieces (items) means two or more pieces (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that, although terms such as first and second may be used in this application to describe objects, the objects are not limited to the terms. The terms are merely used for distinguishing the objects from each other.

The terms "including", "having", and any variations thereof mentioned in the following descriptions of this application are intended to cover a non-exclusive inclusion. For example, a process, a method, a system, a product, or a device that includes a series of steps or units is not limited to listed steps or units, but optionally further includes another unlisted step or unit, or optionally further includes another inherent step or unit of the process, the method, the product, or the device. It should be noted that in this application, the term such as "example" or "for example" is used to represent giving an example, an illustration, or a description. Any method or design scheme described as an "example" or "for example" in this application should not be construed as being preferred to or having more advantages than another method or design scheme. Exactly, use of the terms such as "example" or "for example" is intended to present a related concept in a specific manner.

Technologies provided in this application may be applied to various communication systems. For example, the communication system may be a fourth generation (4th generation, 4G) communication system (for example, a long-term evolution (long-term evolution, LTE) system), a fifth generation (5th generation, 5G) communication system, a wireless local area network (wireless local area network, WLAN) system, a converged system of a plurality of systems, or a future communication system such as a 6G communication system. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a terminal, a communication module, a node, a communication node, or the like. In this application, the network element is used as an example for description. For example, the communication system may include at least one terminal and at least one access network device. The access network device may send a downlink signal to the terminal, and/or the terminal may send an uplink signal to the access network device. In addition, it may be understood that, if the communication system includes a plurality of terminals, the plurality of terminals may alternatively send signals to each other. In other words, both a signal sending network element and a signal receiving network element may be terminals.

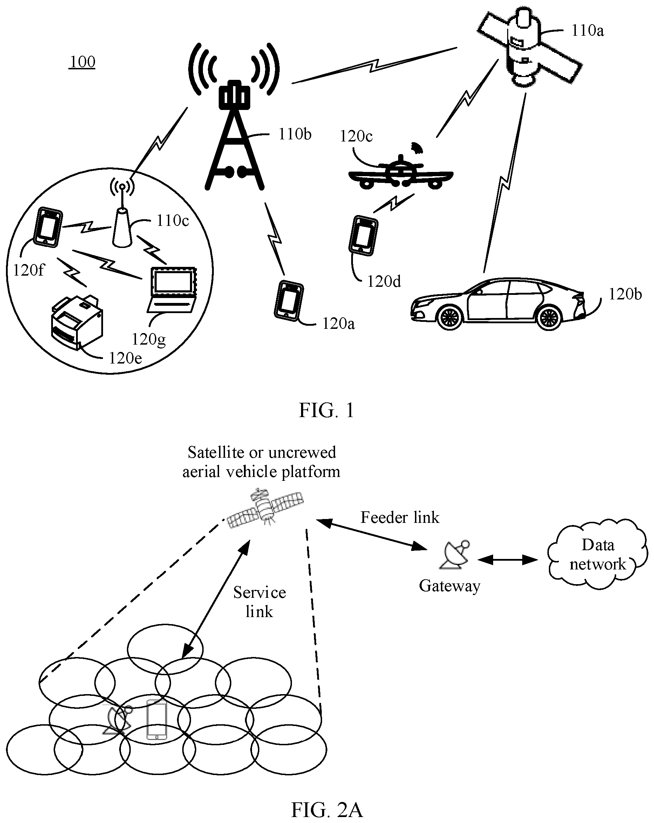

A communication method provided in embodiments of this application may be applied to a wireless communication system such as 5G, 6G, or satellite communication. Refer to FIG. 1. FIG. 1 is a simplified diagram of a wireless communication system according to an embodiment of this application. As shown in FIG. 1, the wireless communication system includes a radio access network 100. The radio access network 100 may be a next generation (for example, 6G or a higher version) radio access network, or a conventional (for example, 5G or 4G) radio access network. One or more terminals (120a to 120g, collectively referred to as 120) may be connected to each other, or may be connected to one or more network devices (110a to 110c, collectively referred to as 110) in the radio access network 100. The connection may be in a wired or wireless manner. Optionally, FIG. 1 is merely a diagram. The wireless communication system may further include another device, for example, may further include a core-network device, a wireless relay device, and/or a wireless backhaul device not shown in FIG. 1.

Optionally, in actual application, the wireless communication system may simultaneously include a plurality of network devices (also referred to as access network devices), or may simultaneously include a plurality of terminals. One network device may serve one or more terminals at the same time. One terminal may also access one or more network devices at the same time. Quantities of terminals and network devices included in the wireless communication system are not limited in embodiments of this application.

The network device may be an entity that is configured to transmit or receive a signal on a network side. The network device may be an access device through which the terminal accesses the wireless communication system in a wireless manner. For example, the network device may be a base station. The base station may broadly cover the following names, or may be replaced with the following names, for example: a RAN node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a main station MeNB, a secondary station SeNB, a multi-standard radio (multi-standard radio, MSR) node, a home base station, a network controller, an access node, a radio node, an access point (access point, AP), a transmission node, a transceiver node, a baseband unit (building baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, or a positioning node. The base station may be a macro base station, a micro base station, a relay node, a donor node or the like, or a combination thereof. Alternatively, the network device may be a communication module, a modem, or a chip disposed in the foregoing device or apparatus. Alternatively, the network device may be a mobile switching center, a device that shoulders a function of the base station in device-to-device (device-to-device, D2D), vehicle-to-everything (vehicle-to-everything, V2X), and machine-to-machine (machine-to-machine, M2M) communication, a network-side device in a 6G network, a device that shoulders a function of the base station in a future communication system, or the like. The network device may support networks with a same access technology or different access technologies. A specific technology used for and a specific device form of the network device are not limited in embodiments of this application.

The network device may be fixed or mobile. For example, base stations 110b and 110c are stationary, and are responsible for wireless transmission and reception for one or more cells of the terminal 120. A helicopter or uncrewed aerial vehicle 120c shown in FIG. 1 may be configured to serve as a mobile base station, and one or more cells may move based on a position of the mobile base station 120c. In another example, the helicopter or uncrewed aerial vehicle (120c) may be configured as a terminal that communicates with a satellite base station 110a.

In this application, a communication apparatus configured to implement the foregoing access network functions may be an access network device, a network device having some functions of an access network, or an apparatus that can support implementation of the access network functions, for example, a chip system, a hardware circuit, a software module, or a hardware circuit plus a software module. The apparatus may be installed in the access network device or used together with the access network device. In the method of this application, description is made by using an example in which a communication apparatus configured to implement a function of the access network device is an access network device.

The terminal may be an entity that is configured to receive or transmit a signal on a user side, for example, a mobile phone. The terminal may be configured to connect to a person, an object, and a machine. The terminal may communicate with one or more core networks through the network device. The terminal includes a handheld device having a wireless connection function, another processing device connected to a wireless modem, a vehicle-mounted device, or the like. The terminal may be a portable, pocket-sized, handheld, computer built-in, or vehicle-mounted mobile apparatus. The terminal 120 may be widely used in various scenarios, such as cellular communication, D2D, V2X, point-to-point (point-to-point, P2P), machine-to-machine (machine-to-machine, M2M), machine-type communication (machine-type communication, MTC), the Internet of things (Internet of things, IoT), virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal 120 are as follows: 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile Internet device (mobile Internet device, MID), a wearable device such as a smartwatch, a VR device, an AR device, a wireless terminal in industrial control (industrial control), a terminal in an Internet of vehicles system, a wireless terminal in self-driving (self-driving), a wireless terminal in a smart grid (smart grid), a wireless terminal in transportation safety (transportation safety), a wireless terminal such as a smart fuel dispenser in a smart city (smart city), a terminal on a high-speed train, and a wireless terminal such as a smart speaker, a smart coffee machine, or a smart printer in smart home (smart home). The terminal 120 may be a wireless device in the foregoing scenarios or an apparatus disposed in the wireless device, for example, a communication module, a modem, or a chip in the foregoing device. The terminal may also be referred to as a terminal device, user equipment (user equipment, UE), a mobile station (mobile station, MS), a mobile terminal (mobile terminal, MT), or the like. Alternatively, the terminal may be a terminal in a future wireless communication system. The terminal may be used in a device of a dedicated network or a general-purpose device. A specific technology used for and a specific device form of the terminal are not limited in embodiments of this application.

Optionally, the terminal may be configured to serve as a base station. For example, the UE may serve as a scheduling entity that provides sidelink signals between UEs in V2X, D2D, P2P, or the like. As shown in FIG. 1, a cellular phone 120a and a vehicle 120b communicate with each other by using sidelink signals. The cellular phone 120a communicates with a smart home device 120e, without relaying a communication signal via the base station 110b.

In this application, a communication apparatus configured to implement functions of the terminal may be a terminal, may be a terminal that has some functions of the terminal, or may be an apparatus that supports implementation of the functions of the terminal, for example, a chip system. The apparatus may be installed in the terminal or used together with the terminal. In this application, the chip system may include a chip, or may include a chip and another discrete component. In technical solutions provided in this application, description is made by using an example in which the communication apparatus is a terminal or UE.

Optionally, the wireless communication system usually includes cells, the base station provides cell management, and the base station provides a communication service for a plurality of mobile stations (mobile stations, MSs) in the cells. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components on a same rack. Optionally, one cell may correspond to one carrier or component carrier.

In some deployments, the network device mentioned in embodiments of this application may be a device including a CU or a DU, or including a CU and a DU; or a device of a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, in a BBU. The RU may be included in a radio frequency device or a radio frequency unit, for example, included in an RRU, an AAU, or an RRH.

The RAN node may support one or more categories of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, for a part of downlink and/or uplink baseband functions compared with the CPRI, for example, for the downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for the uplink, one or more of digital beamforming (beamforming, BF) or fast Fourier transform (fast Fourier transform, IFFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting between the DU and RU correspond to different categories (categories, Cat) of eCPRIs, such as eCPRIs Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of decoding, de-rate matching, descrambling, demodulation, inverse discrete Fourier transform (inverse discrete Fourier transform, IDFT), channel equalization, and the RE demapping), and other functions after the demapping (for example, one or more of digital BF or fast Fourier transform (fast Fourier transform, FFT)/CP removal) are moved to the RU for implementation. It may be understood that, for descriptions of functions of DUs and RUs corresponding to various categories of eCPRIs, reference may be made to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or an apparatus that can support the network device in implementing the function, for example, a chip system, a hardware circuit, a software module, or a combination of a hardware circuit and a software module. The apparatus may be installed in the network device or used together with the network device. In embodiments of this application, description is made by merely using an example in which the apparatus configured to implement the function of the network device is a network device, and this constitutes no limitation on the solutions in embodiments of this application.

It may be understood that this application may be applied between a network device and a terminal.

Communication between the network device and the terminal complies with a specified protocol layer structure. The protocol layer structure may include a control plane protocol layer structure and a user plane protocol layer structure. For example, the control plane protocol layer structure may include functions of protocol layers, such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers, such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal may further include an artificial intelligence (artificial intelligence, AI) layer, used to transmit data related to an AI function.

Data transmission between the network device and the terminal is used as an example. The data transmission needs to pass through a user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then the MAC layer generates a transport block, and subsequently wireless transmission is performed through the physical layer. Data is encapsulated accordingly at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal may further have an application layer and a non-access stratum. The application layer may be used to provide a service for an application installed in the terminal. For example, downlink data received by the terminal may be sequentially transmitted from the physical layer to the application layer, and then is provided by the application layer for the application. For another example, the application layer may obtain data generated by the application and sequentially transmit the data to the physical layer, and then the data is sent to another communication apparatus. The non-access stratum may be used for forwarding user data, for example, forwarding uplink data received from the application layer to the SDAP layer, or forwarding downlink data received from the SDAP layer to the application layer.

It should be understood that a quantity and types of devices in the communication system shown in FIG. 1 are merely used as an example, and this application is not limited thereto. In actual application, the communication system may further include more terminals and more access network devices, and may further include another network element, for example, may include a core-network device and/or a network element configured to implement the artificial intelligence function.

It may be understood that all or a part of functions implemented by one or more of the terminal, the access network device, the core-network device, or the network element configured to implement the artificial intelligence function may be virtualized, that is, implemented through one or more of a dedicated processor or a general-purpose processor and a corresponding software module. Because the terminal and the access network device are related to an interface for air interface transmission, receiving and sending functions of the interface may be implemented by hardware. Core-network devices such as an operation, administration, and maintenance (operation, administration, and maintenance, OAM) network element can all be virtualized. Optionally, one or more functions of the virtualized terminal, access network device, core-network device, or network element configured to implement the artificial intelligence function may be implemented by a cloud device, for example, implemented by a cloud device in an over-the-top (over-the-top, OTT) system.

The following first describes an NTN network in this application.

The NTN is a network that performs a communication service by using radio frequency resources on a platform, such as a satellite platform (including a low earth orbit (low earth orbit, LEO), a middle earth orbit (middle earth orbit, MEO), a geostationary earth orbit (geostationary earth orbit, GEO)), an uncrewed aerial vehicle (uncrewed aerial vehicle, UAV) platform, or an HAPS platform. Compared with a terrestrial cellular network (for example, fifth generation (5th generation, 5G) mobile communication), the NTN network is characterized by wide coverage, a low latency, broadband, and low costs. As a supplement and extension of a terrestrial network, the NTN network can implement wide-area seamless coverage that cannot be implemented by a wired telephone network and a terrestrial mobile communication network, thereby effectively resolving a problem of Internet access in areas with insufficient communication infrastructure. A large quantity of satellites are deployed in the low earth orbit, and a round-trip transmission delay between a satellite and a ground terminal is greatly reduced to a low delay of dozens of milliseconds. The use of technologies such as high-frequency bands, multi-spot beams, and frequency reuse significantly improves communication capabilities of the satellites, reduces a unit broadband cost, and can satisfy a requirement of a service with a high information rate. Compared with communication infrastructure such as 5G ground base stations and submarine fiber optic cables, the NTN has a significant cost advantage. Modern small satellites have low research, development, and manufacturing costs, and a software-defined technology can further prolong the service life of an in-orbit satellite. The NTN network may be used in scenarios such as global coverage (such as remote areas and ocean-going ships), emergency disaster relief (such as disaster monitoring and emergency communication), Internet of Everything, and high-speed moving (such as high-speed railways and airplanes).

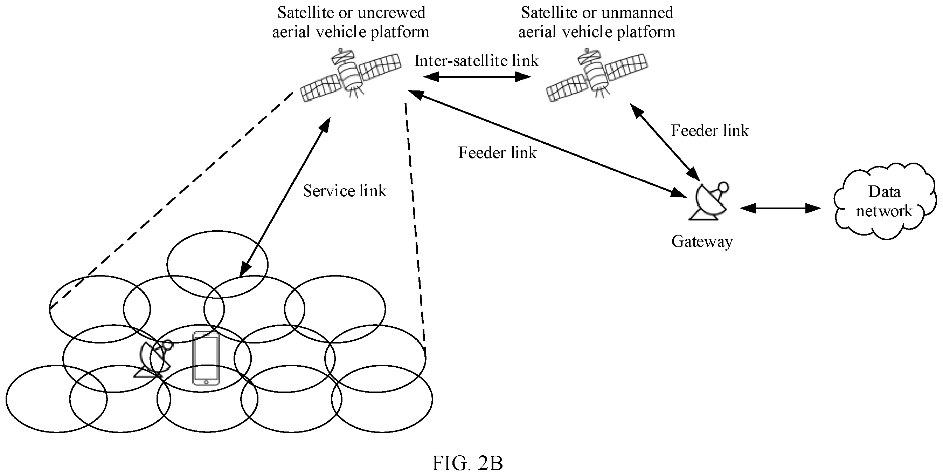

Typical scenarios for the NTN network to provide terminal access include a transparent payload (transparent payload) scenario and a regenerative payload (regenerative payload) scenario. FIG. 2A is a diagram of an NTN scenario based on a transparent payload. The transparent payload is a payload in which a frequency carrier of an uplink radio frequency signal is changed, with filtering and amplification performed on the uplink radio frequency signal before downlink transmission. This payload has only a radio frequency processing unit and does not have processing such as baseband demodulation or decoding. Therefore, a signal waveform remains unchanged and is repeated. FIG. 2B is a diagram of an NTN scenario based on a regenerative payload. The regenerative payload is a payload in which an uplink radio frequency (radio frequency, RF) signal is converted and amplified before downlink transmission. The signal conversion means digital processing, and may include demodulation, decoding, re-encoding, remodulation, and/or filtering. This is actually equivalent to that a satellite (or a UAS platform) has all or some functions of a base station.

Usually there are the following elements for the NTN network.

(1) One or more gateways (gateways) connect the NTN network to a common data network (common data network).
(2) Feeder link (feeder link): a radio link between a gateway and a satellite (or a UAS platform).
(3) Service link (service link): a radio link between a terminal and the satellite (or the UAS platform).
(4) Satellite (or the UAS platform): It can implement the transparent payload and the regenerative payload.
(5) Whether a satellite constellation has an inter-satellite link (inter-satellite link, ISL) is optional. The inter-satellite link requires the satellite to be the regenerative payload (that is, if there is an inter-satellite link, the satellite needs to be the regenerative payload). The ISL may operate at an RF frequency or in an optical band.
(6) The terminal is served by a satellite (or a UAS platform) in a target service area.

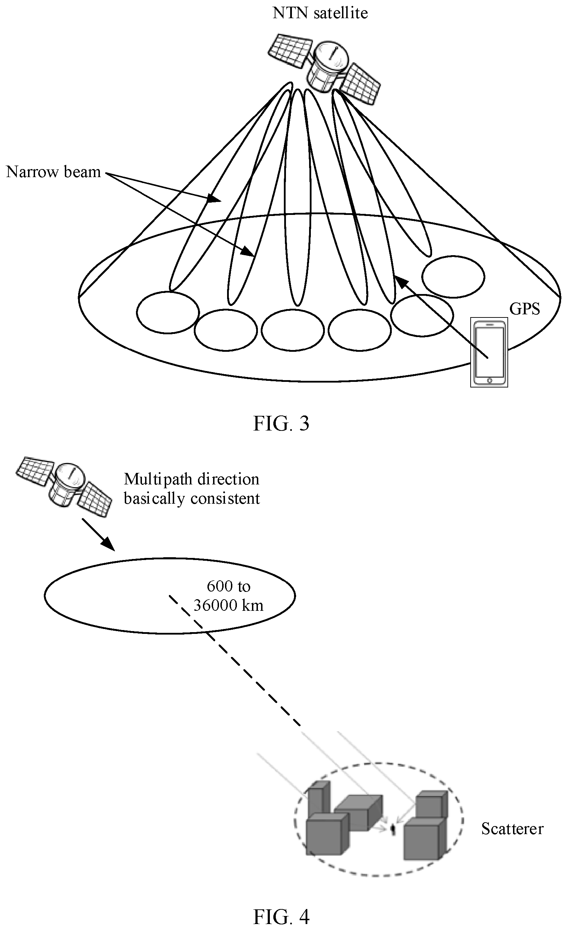

FIG. 3 is a diagram of communication between a satellite base station and a terminal. In an NTN scenario, because a transmission distance from a satellite to the ground is long and a loss is large, the satellite base station uses a high-gain narrow beam to directionally point to a served terminal, to ensure service performance of a link. On a satellite side, a location of the terminal can be obtained, and a straight-line transmission direction between the satellite and the ground terminal is computed based on an ephemeris of the satellite and the location of the terminal. FIG. 4 is a diagram of a satellite channel. Considering that an overall scattering environment of the satellite channel is simple, a line-of-sight (line-of-sight, LoS) path is mainly used, and scatterers are mostly concentrated on a terminal side, a transmission direction computed based on a location may be considered as a sending direction of a narrow beam. In addition, the satellite may alternatively obtain, through beam management at a narrow beam level, a narrow-beam sending direction that is most suitable for the terminal. It should be noted that, the narrow beam direction computed based on the location and the narrow beam direction obtained based on beam management both aim to achieve optimal quality of service for a single terminal without considering a scenario in which another terminal exists.

In addition, compared with a terrestrial system, a satellite moves faster and a transmission delay is longer, resulting in a more obvious time-varying phenomenon of the satellite channel. However, a satellite system mostly uses a frequency division duplexing (frequency division duplexing, FDD) mode, and channel-related information (for example, a channel quality indicator (channel quality indicator, CQI), a rank indicator (rank indicator, RI), and a precoding indicator (precoding matrix indicator, PMI)) need to be obtained through channel measurement and feedback by using a channel state information-reference signal (channel state information-reference signal, CSI-RS). In this case, a long round-trip delay and a long channel measurement period both cause channel feedback information to be unable to match, in a timely manner, a rapidly changing channel state, that is, to be significantly affected by channel aging. As a result, data transmission performance is greatly reduced.

In an NR terrestrial system, a manner in which a base station obtains channel information is to send a CSI-RS to a terminal. The terminal performs channel measurement based on the CSI-RS, and feeds back a PMI that matches a channel state to the base station. The base station may perform weighting processing on the CSI-RS through a weight design, to form a quantity of CSI-RS ports less than a quantity of transmit antennas of the base station. The terminal notifies, in a form of PMI codebook feedback based on channels on the plurality of CSI-RS ports, the base station of a precoding result. Generally, the terminal performs Eigen decomposition on an estimated covariance matrix of downlink channels:

$$R = H^H H = U \Lambda U^H,$$

where

$H \in \mathbb{C}^{N_R \times P}$ represents downlink channels from the base station to the terminal, $N_R$ is a quantity of receive antennas of the terminal, P is the quantity of CSI-RS ports, and U is a unitary matrix obtained through the decomposition of the covariance matrix R. L-layer PMIs fed back by the terminal usually include main spatial transmission directions of the channels, namely, 1st to Lth columns of the matrix U, but do not include weight information of each transmission direction, namely, first L diagonal elements of the matrix $\Lambda$.

Currently, there are mainly three types of PMI codebooks: Type I, Type II, and Type II PS codebooks. The Type I codebook is mainly to use one or more columns of DFT vectors to match one or more strong paths (1st to Lth columns of the matrix U) in multipath channel transmission space one by one. The Type II codebook is mainly to use several columns of discrete Fourier transform (discrete Fourier transform, DFT) vectors, to perform linear combination and match a plurality of strong paths in channel transmission space. The Type II PS codebook is mainly to perform weighting and sending of the CSI-RS on the base station side, where the terminal selects some ports from a plurality of CSI-RS ports to perform linear combination, instructing the base station side to perform linear combination by using a plurality of columns of CSI-RS weights and match a plurality of strong paths in channel space. A form of an lth column of a PMI matrix corresponding to each codebook type may be summarized as shown in Table 1 below.

Table 1

| Codebook type | Type I | Type II | Type II PS |
|---|---|---|---|
| $W_{PMI}[:,l]$ | $W_{PMI}[:,l] = f_l$ | $W_{PMI}[:,l] = \sum \alpha_l f_l$ | $W_{PMI}[:,l] = \mathbb{I} \cdot w_l$ |

In the table, $f_l = \begin{bmatrix} v_l \\ \varphi_l v_l \end{bmatrix}$, $v_l$ represents a column of DFT vectors, $\varphi_l$ is a rotation phase, $\mathbb{I}$ is a port indication

matrix, and $w_l$ represents an inter-port combination coefficient. The PMI codebooks in the NR protocol are mainly designed based on a MIMO array form, and a dual-linearly-polarized antenna is used for sending by default on the base station side.

Therefore, $f_l$ and $\mathbb{I}$ both match this codebook characteristic. For example, if the quantity of CSI-RS ports is 4, and ports 2 and 3 are selected for the PS codebook,

$$\mathbb{I} = \begin{bmatrix} 0 & 1 & 1 & 0 & & & \\ & & & & 0 & 1 & 1 & 0 \end{bmatrix}.$$

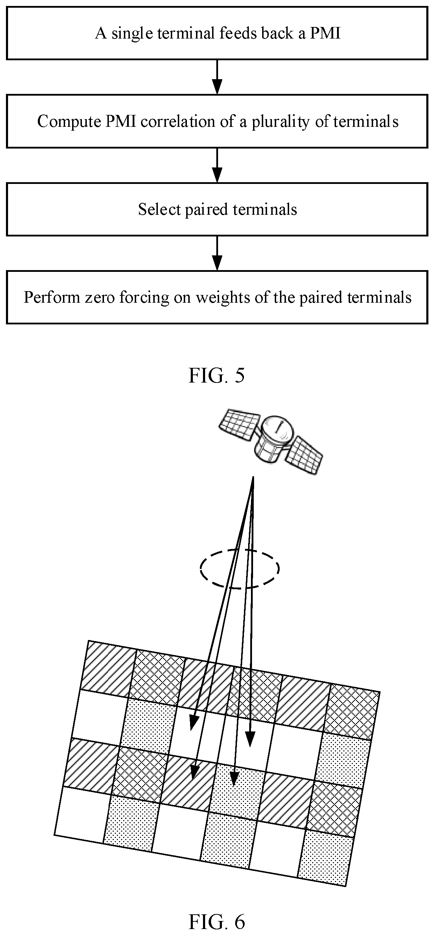

In a channel measurement process, the base station mainly obtains a PMI feedback or designs a CSI-RS weight for a single terminal. In a single-terminal scenario, a data transmission weight may be represented as $W_{PDSCH} = W_{CSI}W_{PMI}$. In a multi-terminal scenario, the base station computes, based on channel feedback results from a plurality of terminals, correlation between data weights of the terminals, determines terminals that can be paired into a group, performs space division sending, and designs multi-terminal weights for the paired terminals. Generally, the base station uses a linear precoding design method, for example, a multi-terminal zero forcing scheme, to compute a weight to be used during actual sending. During data transmission, the zero forcing scheme can eliminate interference between terminals, but causes, to some extent, performance of a single terminal to obviously degrade. FIG. 5 shows a process of designing multi-terminal transmission weights in a terrestrial system.

However, the foregoing codebooks are mainly designed for SU channels and dual-polarized antennas, and are not robust enough for a fast time-varying channel environment. Specifically, there are mainly the following problems.

(1) The PMI in the NR standard is mainly designed for channels of a single terminal, and a channel on each antenna port belongs to the terminal. Therefore, codebooks other than the PS codebooks do not focus on port feedback, that is, some ports are not adapted as target channels, and some ports are used for feedback in an interference channel scenario. In addition, the PMI feeds back only a transmission direction characteristic of the terminal, and does not include weight information of the transmission direction.

(2) The PMI in the NR standard is mainly based on an assumption of a dual-polarized antenna on the base station side. To be specific, first half columns and second half columns of a codebook belong to different polarization directions, but used beam or port indication vectors are fully the same, and only phases or coefficients are different. However, in an NTN scenario, a satellite generally uses left-hand circular or right-hand circular polarization, and then there is no relationship between beam directions of first half ports and second half ports of the CSI-RS. Therefore, an NR codebook does not adapt to the NTN scenario.

(3) In the NR standard, regardless of a periodic CSI-RS, a semi-constant CSI-RS, or an aperiodic CSI-RS, a PMI fed back by the terminal is a channel weight at a current measurement instance. However, in the NTN scenario, because the satellite moves at a high speed and a transmission delay is long, when a PMI at a measurement instance is fed back to the satellite base station, an amplitude and a phase of a channel may have obviously changed. Consequently, it is not robust to apply an NR weight feedback to the NTN.

In a satellite system, the satellite base station serves a target terminal by using a directional narrow beam. Considering that a satellite channel tends to be LoS and generally supports only single-stream transmission, the satellite may use, based on a transmission direction to the terminal, the beam direction as a CSI-RS weight, to form single-port (port) channel measurement (without a need to feed back a PMI), and the terminal is restricted to feed back only a CQI. Actually, because the CQI indicates only channel quality information at a coarse granularity, it is not sensitive to time varying of a channel, and therefore transmission performance is robust in a scenario with a single terminal. In a scenario with a plurality of terminals, the satellite may use a beam in a corresponding direction for each terminal. However, to avoid mutual interference between beams, the satellite base station needs to perform space division multiplexing on some beams and frequency division or time division multiplexing on some beams. Herein, space division multiplexing means that beams whose inter-beam correlation is less than a threshold in different directions may be sent on a same frequency band at same time, and frequency division or time division multiplexing means that a plurality of beams need to be sent on different frequency bands or at different time. For example, common frequency division multiplexing includes four-color multiplexing (in a figure, different filling shapes are used to represent different frequency bands or time), and beams in adjacent directions are simultaneously sent on four different frequency bands, as shown in FIG. 6.

Space division multiplexing can most effectively use time-frequency resources. However, there is a correlation (which may also be considered as isolation) requirement for a group of beams on which space division can be simultaneously performed. In particular, it is usually difficult to allocate beams in adjacent directions to a same space division group. In contrast, frequency division or time division multiplexing has no requirement on the correlation between beams, and can be flexibly selected, but causes spectral efficiency to greatly decrease. Therefore, for multi-terminal transmission, both resource utilization and performance impact caused by interference between terminals need to be considered.

For a current satellite system, if frequency division or time division multiplexing is used between beams, spectral efficiency is significantly reduced, and resource utilization is not as high as that of full frequency reuse. If space division multiplexing is used, inter-beam interference gradually becomes obvious as a quantity of terminals increases, and a quantity of beams that satisfy isolation between beams in a space division beam group is also limited. As a result, an overall capacity of the satellite is limited and cannot increase linearly with the quantity of beams.

Therefore, this application provides a communication solution, to resolve the following problem: In an NTN system, when a terminal feeds back only a CQI, it is difficult for a satellite to process interference between a plurality of beams because complete channel information cannot be obtained, with limited system capacity improvement; and when the terminal uses an NR protocol PMI feedback procedure, a used feedback codebook does not match a satellite scenario and is not robust for a time-varying channel, with limited system capacity improvement.

The following describes, based on the communication system shown in FIG. 1, a communication method provided in this application.

In this application, "sending information to... (for example, by a terminal)" or a related illustration in the accompanying drawings may be understood as that a destination of the information is the terminal, and may include directly or indirectly sending the information to the terminal. "Receiving, from... (for example, a terminal), information", or "receiving information from... (for example, a terminal)", or a related illustration in the accompanying drawings may be understood as that a source of the information is the terminal, and may include directly or indirectly receiving the information from the terminal. The information may undergo necessary processing, for example, a format change, between the source for sending the information and the destination, and the destination may understand valid information from the source. A similar expression in this application may be understood similarly, and details are not described herein.

The following describes in detail the communication method provided in embodiments of this application. It may be understood that, in this application, example descriptions are given by using an example in which a terminal and a server serve as executive bodies of an interaction example, but the executive bodies of the interaction example are not limited in this application. For example, the terminal in the method provided in this application may alternatively be a chip, a chip system, or a processor used in the terminal, or may be a logical node, a logical module, or software that can implement all or some functions of the terminal. The server in the method provided in this application may alternatively be a chip, a chip system, or a processor used in the server, or may be a logical node, a logical module, or software that can implement all or some functions of the server.

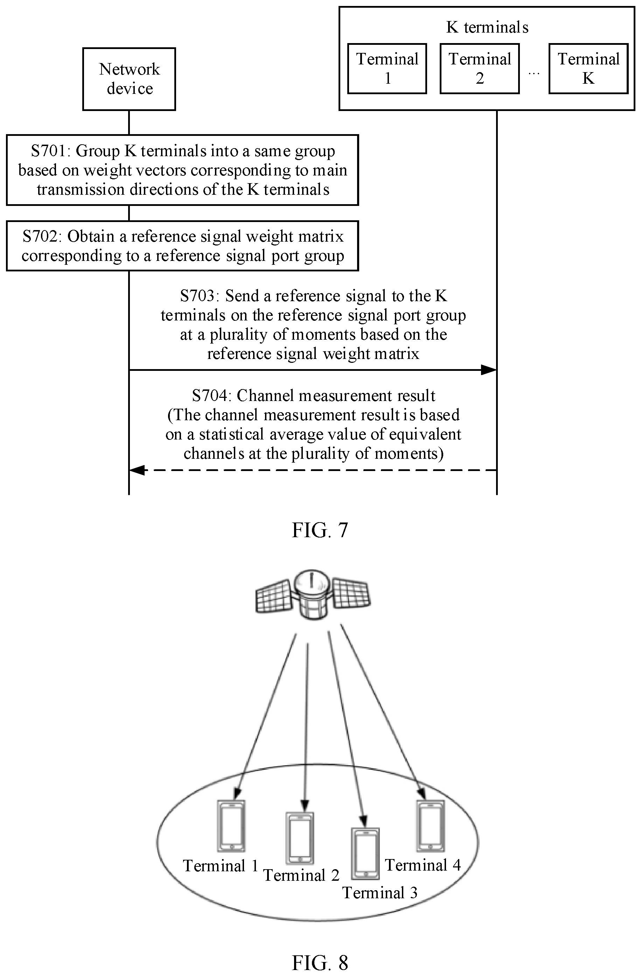

FIG. 7 is a schematic flowchart of a communication method according to an embodiment of this application. For example, the method may include the following steps.

S701: A network device groups K terminals into a same group based on weight vectors corresponding to main transmission directions of the K terminals, where the K terminals use a same reference signal port number group, and K is a positive integer greater than or equal to 2.

For example, the network device in this embodiment may be a satellite base station. The satellite base station determines a main transmission direction from a satellite to an $i^{th}$ terminal based on location information reported by the $i^{th}$ terminal or based on a beam management result, where i is a positive integer less than or equal to K. It is assumed that the satellite base station uses a uniform plan array (uniform planar array, UPA) antenna, and the determined main transmission direction of the $i^{th}$ terminal is $(\tilde{\varphi}_i, \tilde{\theta}_i)$, where $\tilde{\varphi}_i$ is an angle in a horizontal direction, and $\tilde{\theta}_i$ is an angle in a vertical direction. Then a weight vector corresponding to the main transmission direction of the $i^{th}$ terminal may be represented as $\boldsymbol{a}(\tilde{\varphi}_i, \tilde{\theta}_i) \in \mathbb{C}^{N_T \times 1}$, where $\boldsymbol{a}(\varphi, \theta)$ represents a corresponding array steering vector when the transmission direction is $(\varphi, \theta)$. In terms of formulas, $\boldsymbol{a}(\varphi, \theta)$ may be expressed as follows:

$$\boldsymbol{a}(\varphi, \theta) = \boldsymbol{a}_x(\varphi, \theta) \otimes \boldsymbol{a}_y(\theta)$$

$$\boldsymbol{a}_x(\varphi, \theta) = \frac{1}{\sqrt{N_x}}\left[1, e^{-j2\pi\frac{d_x}{\lambda}\sin\theta\cos\varphi}, \dots, e^{-j2\pi\frac{d_x}{\lambda}(N_x-1)\sin\theta\cos\varphi}\right]^T$$

$$\boldsymbol{a}_y(\theta) = \frac{1}{\sqrt{N_y}}\left[1, e^{-j2\pi\frac{d_y}{\lambda}\cos\theta}, \dots, e^{-j2\pi\frac{d_y}{\lambda}(N_y-1)\cos\theta}\right]$$

where $N_x$ and $N_y$ are a quantity of antenna elements in the horizontal direction and a quantity of antenna elements in the vertical direction respectively, $d_x$ and $d_y$ are an antenna element spacing in the horizontal direction and an antenna element spacing in the vertical direction respectively, and $\lambda$ represents a wavelength of a carrier center frequency.

The satellite base station selects a total of K terminals based on $\boldsymbol{a}(\tilde{\varphi}_i, \tilde{\theta}_i)$ of the plurality of terminals to perform pre-pairing. A pairing rule may be that correlation of the weight vectors corresponding to the main transmission directions of the K terminals is less than or equal to a first threshold; or isolation of the weight vectors corresponding to the main transmission directions of the K terminals is greater than or equal to a second threshold; or an interval between transmission angles of the main transmission directions of the K terminals is greater than or equal to a third threshold, or the like. The first threshold, the second threshold, and the third threshold may be predefined in a protocol, or may be obtained through negotiation between the network device and the terminals.

S702: The network device obtains a reference signal weight matrix corresponding to the reference signal port group.

In this embodiment, a reference signal is described by using a CSI-RS as an example, and certainly may be another reference signal used for channel measurement.

The satellite base station configures a group of shared CSI-RS port numbers for the K paired terminals, that is, a quantity of CSI-RS ports of each terminal is K, and the satellite uses same CSI-RS weight vector(s) for the K terminals. On an $i^{th}$ port, a CSI-RS weight vector is equal to a weight vector $\boldsymbol{a}(\tilde{\varphi}_i, \tilde{\theta}_i)$ corresponding to a transmission direction of the $i^{th}$ terminal. In other words, the reference signal weight matrix includes K reference signal weight vectors, each reference signal port corresponds to one reference signal weight vector, and a reference signal weight vector corresponding to the $i^{th}$ reference signal port is equal to a weight vector corresponding to the main transmission direction of the $i^{th}$ terminal.

FIG. 8 is a diagram of terminal pairing. For example, K=4 terminals are paired. Then CSI-RS ports 0 to 3 are allocated to each of the four paired terminals, and an $i^{th}$ column of a CSI-RS weight matrix $\boldsymbol{W}_{CSI}$ is as follows:

$$\boldsymbol{W}_{CSI}[:,i] = \boldsymbol{a}^*(\tilde{\varphi}_i, \tilde{\theta}_i)$$

where $\boldsymbol{a}^*(\tilde{\varphi}_i, \tilde{\theta}_i)$ represents taking the conjugate of $\boldsymbol{a}(\tilde{\varphi}_i, \tilde{\theta}_i)$.

It can be learned that, for the $i^{th}$ terminal, in to-be-measured channels following CSI-RS weighting, only the $i^{th}$ port is a target channel in the main transmission direction of the terminal, and all other ports are interference channels caused by main transmission directions of the paired terminals. The terminals measure corresponding channels following $\boldsymbol{W}_{CSI}$ weighting, and perform feedback for use in designing, on a satellite side, multi-terminal data transmission weights.

S703: The network device sends the reference signal to the K terminals on the reference signal port group at a plurality of time instances based on the reference signal weight matrix, and accordingly the K terminals separately receive the reference signal from the network device.

The network device groups the terminals, and the terminals in the same group use the same reference signal port number group. After obtaining the reference signal weight matrix corresponding to the reference signal port group, the network device sends the reference signal to the K terminals on the reference signal port group at the plurality of time instances based on the reference signal weight matrix, so that the K terminals separately measure the received reference signal.

Scheduled terminals are paired in advance on a network side, and CSI-RS weight vectors are designed for the paired terminals. In this manner, the terminal is enabled to simultaneously measure a target channel state of the terminal itself and an interference channel state of another user.

Further, the method may include the following step (represented by a dashed line in the figure).

S704: The K terminals separately send channel measurement results to the network device, and accordingly the network device receives the channel measurement results from the K terminals.

It is assumed that at a $t^{th}$ instance, a channel $\boldsymbol{H}_i(t) \in \mathbb{C}^{N_R \times N_T}$ of the $i^{th}$ terminal may be represented as follows:

$$\boldsymbol{H}_i(t) = \boldsymbol{H}_i^{chan}(t)\boldsymbol{H}_i^{ant}, \qquad \boldsymbol{H}_i^{ant} = \left[\boldsymbol{a}(\varphi_{i,1}, \theta_{i,1}), \dots, \boldsymbol{a}(\varphi_{i,L}, \theta_{i,L})\right]^T$$

Herein, $\boldsymbol{H}_i^{chan}(t)$ represents a time-varying channel coefficient and complies with complex Gaussian distribution, that is, $\boldsymbol{H}_i^{chan}(t) \sim CN(\boldsymbol{0}, \boldsymbol{\Phi})$, where $\boldsymbol{H}_i^{ant}$ includes only a steering vector related to an actual transmission angle, and may be considered to remain unchanged in a time period T (for example, in one second). L is a quantity of transmission paths of the channel. According to the foregoing measurement phase, multi-port CSI-RS weights of the paired terminals are vector(s) as follows:

$$\boldsymbol{W}_{CSI} = \left[\boldsymbol{a}^*(\tilde{\varphi}_1, \tilde{\theta}_1), \boldsymbol{a}^*(\tilde{\varphi}_2, \tilde{\theta}_2) \dots, \boldsymbol{a}^*(\tilde{\varphi}_K, \tilde{\theta}_K)\right]$$

Therefore, CSI-RS equivalent channels received by the ith terminal may be represented as follows:

$$H_{eff,i}(t) = H_i(t)W_{CSI} = H_i^{chan}(t)G_i^{ant}, \qquad G_i^{ant} = H_i^{ant}W_{CSI}$$

It can be learned that the equivalent channels of the ith terminal are associated with a first parameter $G_i^{ant}$.

Further, the first parameter $G_i^{ant}$ is associated with the reference signal weight matrix $W_{CSI}$ and an array steering vector $H_i^{ant}$ corresponding to a transmission direction. The first parameter $G_i^{ant}$ may be considered to remain unchanged in the time T.

To eliminate impact caused by a time-varying channel and enable the terminal to feed back only information related to $G_i^{ant}$, the terminal may perform statistical averaging processing on channels at N CSI-RS sending instances,

$0 \le t_1 < t_2 < \cdots < t_N \le {T}/{2}$, in the time from 0 to T, and extract the information related to $G_i^{ant}$. The terminal may perform computing as follows:

$$R_i^{ant} = \frac{1}{N}\sum_{n=1}^{N}\left(H_{eff,i}(t_n)\right)^H H_{eff,i}(t_n) = (G_i^{ant})^H \Phi G_i^{ant}$$

Then $R_i^{ant}$ is fed back based on a specific rule.

In other words, the channel measurement result in this embodiment is based on a statistical average value of equivalent channels at the plurality of time instances, and the equivalent channels are channels estimated based on the reference signal.

This embodiment describes two example implementations in which the terminal feeds back the channel measurement result.

In a first implementation, the statistical average value is a covariance matrix, the channel measurement result includes amplitudes and phases of a plurality of elements in the covariance matrix, and values of the amplitudes of the plurality of elements are greater than or equal to a fourth threshold.

For the ith terminal, only a channel on the ith port is the target channel, channels on other ports are interference from other terminals, and the following exists:

$$G_i^{ant}[m,n] = a^T(\varphi_{i,m},\theta_{i,m})a^*(\tilde{\varphi}_n,\tilde{\theta}_n), \qquad m \in [1,L], \qquad n \in [1,K]$$

Therefore, it can be learned that, elements in an ith column of $G_i^{ant}$ represent inner products of CSI-RS weight vectors that correspond to various channel paths of the terminal and the transmission direction of the terminal, and therefore have highest amplitudes; and elements in all other columns are inner products of CSI-RS weights that correspond to channels of the terminal and transmission directions of other terminals, and have low amplitudes. Therefore, the covariance matrix $R_i^{ant}$ may be represented as follows:

$$R_i^{ant} = \begin{bmatrix} a^T(\tilde{\varphi}_1,\tilde{\theta}_1)Ba^*(\tilde{\varphi}_1,\tilde{\theta}_1) & \cdots & a^T(\tilde{\varphi}_1,\tilde{\theta}_1)Ba^*(\tilde{\varphi}_K,\tilde{\theta}_K) \\ \vdots & \ddots & \vdots \\ a^T(\tilde{\varphi}_K,\tilde{\theta}_K)Ba^*(\tilde{\varphi}_1,\tilde{\theta}_1) & \cdots & a^T(\tilde{\varphi}_K,\tilde{\theta}_K)Ba^*(\tilde{\varphi}_K,\tilde{\theta}_K) \end{bmatrix}$$

where $a^T$ represents transposition, and $a^*$ represents conjugate.

$$B = \sum_{l=1}^{L} \rho_l a^*(\varphi_{i,l},\theta_{i,l})a^T(\varphi_{i,l},\theta_{i,l})$$

Average power of an $l^{th}$ channel path is $\rho_l$, $\sum_{l=1}^{L} \rho_l = 1$ , and the following exists:

$$\boldsymbol{\Phi} = \begin{bmatrix} \rho_1 & \cdots & \\ \vdots & \ddots & \vdots \\ & \cdots & \rho_L \end{bmatrix}$$

It can be learned that each element of $\boldsymbol{R}_i^{ant}$ is actually weighted correlation between ports of reception channels of the $i^{th}$ terminal. Therefore, an element $\boldsymbol{R}_i^{ant}[i, i]$ in an $i^{th}$ row and an $i^{th}$ column of $\boldsymbol{R}_i^{ant}$ represents an autocorrelation of a channel port i, with a highest amplitude, and other elements are cross-correlation between ports, with low amplitudes. Further, it is observed that $\boldsymbol{R}_i^{ant}$ is a conjugate transpose matrix, and the terminal may feed back, by using an amplitude of $\boldsymbol{R}_i^{ant}[i, i]$ as a reference, an amplitude and a phase of only an element whose amplitude is higher than a specific threshold in the upper half of the matrix. In other words, for a $k^{th}$ column of $\boldsymbol{R}_i^{ant}$, only an element whose amplitude value is greater than $\eta|\boldsymbol{R}_i^{ant}[i, i]|$ is quantized and fed back from ($K$ - $k$ + 1) elements in the upper half of the matrix, where $\eta \leq 1$ is a preset amplitude proportion threshold. A quantization manner of the element may be that an amplitude and a phase of the element are separately quantized by using finite bits, and corresponding bits are fed back. This is the same as a coefficient quantization method in a current NR standard, and details are not described herein. In this feedback manner, the satellite base station is enabled to obtain complete multi-terminal channel covariance information with finite feedback overheads, where the information includes not only main transmission direction characteristics of channels but also a weight of each direction.

The satellite base station may restore a channel covariance matrix $\widehat{\boldsymbol{R}}_i^{ant}$ of each terminal based on channel information fed back by the K terminals, and design and optimize multi-terminal precoding based on these covariance matrices. Common precoding design methods include the following methods.

(1) An objective is to maximize an average signal-to-interference-plus-noise ratio (SINR) of each terminal as follows:

$$\max_{\boldsymbol{W}_{PMI}} ASINR_i = \max_{\boldsymbol{W}_{PMI}} \frac{\left|\boldsymbol{W}_{PMI}^H[:, i]\widehat{\boldsymbol{R}}_i^{ant}\boldsymbol{W}_{PMI}[:, i]\right|^2}{\sum_{k \neq i}^{K}\left|\boldsymbol{W}_{PMI}^H[:, k]\widehat{\boldsymbol{R}}_i^{ant}\boldsymbol{W}_{PMI}[:, k]\right|^2 + \sigma^2}$$

where $ASINR_i$ represents a long-time statistical average signal-to-interference-plus-noise ratio of an $i^{th}$ user, $W_{PMI}$ is a precoding matrix to be solved and its $i^{th}$ column represents a precoding vector used for sending data of the $i^{th}$ user, and $\sigma^2$ represents a Gaussian noise variance following transmit power normalization.

After $W_{PMI}$ is solved, a data transmission weight of the $i^{th}$ terminal may be represented as follows:

$$\boldsymbol{W}_{PDSCH,i} = \boldsymbol{W}_{CSI}\boldsymbol{W}_{PMI}[:, i]$$

(2) An objective is to maximize an average signal-to-leakage-plus-noise ratio (signal-to-leakage-plus-noise ratio, SLNR) of each terminal as follows:

$$\max_{\boldsymbol{W}_{PMI}} ASLNR_i = \max_{\boldsymbol{W}_{PMI}} \frac{\left|\boldsymbol{W}_{PMI}^H[:, i]\widehat{\boldsymbol{R}}_i^{ant}\boldsymbol{W}_{PMI}[:, i]\right|^2}{\sum_{k \neq i}^{K}\left|\boldsymbol{W}_{PMI}^H[:, i]\widehat{\boldsymbol{R}}_k^{ant}\boldsymbol{W}_{PMI}[:, i]\right|^2 + \sigma^2}$$

After $\boldsymbol{W}_{PMI}$ is solved, a data transmission weight of the $i^{th}$ terminal may be represented as follows:

$$\boldsymbol{W}_{PDSCH,i} = \boldsymbol{W}_{CSI}\boldsymbol{W}_{PMI}[:, i]$$

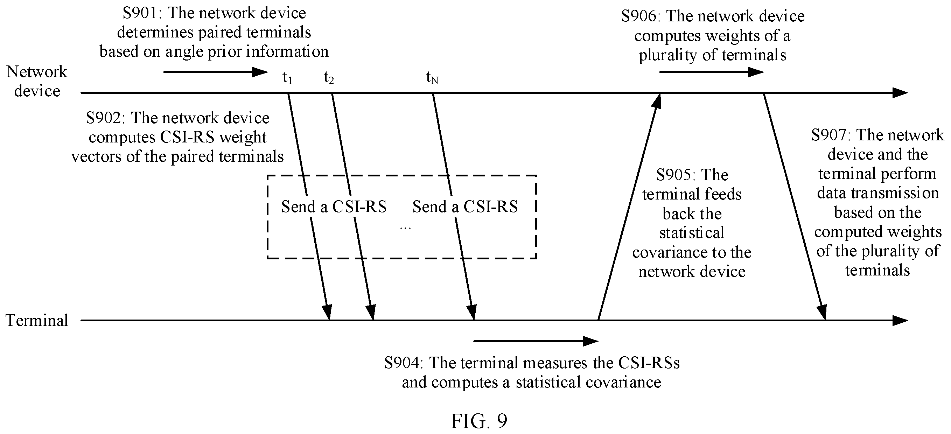

FIG. 9 is a schematic flowchart of interaction over time between a network device and a terminal according to an embodiment of this application. The procedure includes the following steps. S901: The network device determines paired terminals based on angle prior information. S902: The network device computes CSI-RS weight vectors of the paired terminals. S903: The network device sends a CSI-RS to the terminal at a plurality of time instances ($t_1$, $t_2$, ...$t_N$). S904: The terminal measures the CSI-RSs and computes a statistical covariance. S905: The terminal feeds back the statistical covariance to the network device. S906: The network device computes weights of a plurality of terminals. S907: The network device and the terminal perform data transmission based on the computed weights of the plurality of terminals.

It should be noted that although this implementation is mainly described for a scenario with a plurality of terminals, this implementation may also be used for channel measurement and feedback in a single-terminal scenario and improves a transmission rate of a single terminal. Different from the scenario with a plurality of terminals, in the single-terminal scenario, a satellite base station needs to determine several directions of transmission angles in advance to form CSI-RS weights. These directions of angles may be directions close to a main transmission direction, so that a satellite performs joint transmission by using a plurality of channel paths, thereby improving channel quality and improving a transmission rate by using a diversity gain.

The network device pairs scheduled terminals in advance, and designs CSI-RS weights for the paired terminals. In this manner, the terminal is enabled to simultaneously measure a target channel state of the terminal itself and an interference channel state of another terminal. In addition, the terminal performs statistical averaging on CSI-RS reception channels at the plurality of time instances, computes the covariance matrix, and feeds back some elements with high amplitudes in the covariance matrix. In this manner, with low feedback overheads, a base station is enabled to obtain transmission directions and direction weights of both a target channel and an interference channel, so that a satellite designs more robust multi-terminal low-interference transmission weights with better capacities.

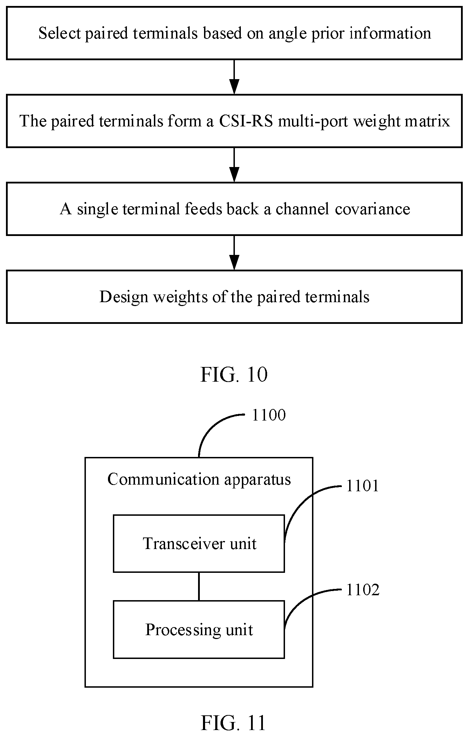

FIG. 10 is a schematic flowchart of terminal pairing based on angle prior information according to an embodiment of this application. In this embodiment, a satellite base station first determines pairing information of scheduled terminals, and then designs robust multi-terminal weights based on a channel covariance matrix feedback from each terminal. Compared with the procedure shown in FIG. 5, improvements are as follows. (1) Based on transmission angle prior information, interference between beams of a plurality of terminals is determined in advance, and CSI-RS weights are designed, so that the terminal can perform deterministic measurement on both a target channel and an interference channel. (2) The terminal feeds back, based on CSI-RS weight configuration and a satellite channel characteristic, a part of elements of a statistically-averaged channel covariance matrix. In this way, impact of a time-varying channel can be eliminated and a transmission direction and a direction weight of a channel can be fed back at the same time while excessively high feedback overheads are avoided, so that a satellite base station designs more robust data weights that can reduce interference between terminals.

In a second implementation, the statistical average value is a covariance matrix, the channel measurement result includes first $l'$ columns of vectors in a characteristic unitary matrix of the covariance matrix, and a port indication vector and a quantized port coefficient of each column of vectors in the $l'$ columns of vectors, $l'$ is a quantity of layers of a precoding matrix used for downlink transmission, and the quantity of layers is less than or equal to a rank of the covariance matrix.

Similar to the first implementation, a satellite base station pairs scheduled terminals in advance based on angle prior information, and computes CSI-RS weights based on main transmission directions of the paired terminals. The terminal performs statistical averaging based on measured CSI-RS equivalent channels, and computes a channel covariance matrix $R_i^{ant}$. Different from the first implementation, in this implementation, the terminal does not directly feed back a plurality of elements of the covariance matrix, but performs Eigen decomposition on the covariance matrix, to obtain the first $l'$ columns of vectors of the characteristic unitary matrix. To be specific:

$$R_i^{ant} = U_{i,ant} \Lambda_{i,ant} U_{i,ant}^H$$

Herein, $\Lambda_{i,ant}$ is a diagonal matrix whose diagonal elements are characteristic values of $R_i^{ant}$ and are arranged in descending order. The terminal feeds back a matrix $U_{i,ant}[:, 1:l']$, and feeds back, for each column, a port indication vector and a quantized port coefficient. In the port indication vector, $\lfloor \eta K \rfloor$ elements are 1, remaining elements are 0, and positions of the elements 1 indicate ports whose coefficient is to be fed back. This feedback manner is similar to the Type II PS codebook in the NR standard, but a multiplexing relationship between the first half of ports and the second half of ports is no longer limited.

The satellite base station restores $\hat{U}_{i,ant}$ based on feedback information received from each terminal, and further designs multi-terminal low-interference weights. Common precoding design methods include the following methods.

(1) Zero forcing criterion: The satellite base station first arranges $\hat{U}_{i,ant}$ based on a terminal sequence as follows:

$$\overline{U} = \left[\widehat{U}_{1,ant}, \dots, \widehat{U}_{K,ant}\right]$$

Then $W_{PMI}$ of all terminals should be as follows:

$$W_{PMI} = \overline{U}(\overline{U}^H \overline{U})^{-1}$$

In this solution, $l' = 1$ is required for each terminal.

(2) Maximize an SINR or SLNR of each terminal, and optimize the issue as follows:

$$\max_{W_{PMI}} \frac{\left|W_{PMI}^H[:,i]\widehat{U}_{1,ant}\widehat{U}_{1,ant}^H W_{PMI}[:,i]\right|^2}{\sum_{k\neq i}^K \left|W_{PMI}^H[:,k]\widehat{U}_{1,ant}\widehat{U}_{1,ant}^H W_{PMI}[:,k]\right|^2 + \sigma^2}$$

or

$$\max_{W_{PMI}} \frac{\left|W_{PMI}^H[:,i]\widehat{U}_{1,ant}\widehat{U}_{1,ant}^H W_{PMI}[:,i]\right|^2}{\sum_{k\neq i}^K \left|W_{PMI}^H[:,i]\widehat{U}_{k,ant}\widehat{U}_{k,ant}^H W_{PMI}[:,i]\right|^2 + \sigma^2}$$

For meanings of parameters in the formulas, refer to the foregoing descriptions.

A procedure of interaction over time between a network device and a terminal is the same as that in the first implementation, and details are not described herein.

In this implementation, the network device pairs scheduled terminals in advance, and designs CSI-RS weights for the paired terminals. In this manner, the terminal is enabled to simultaneously measure a target channel state of the terminal itself and an interference channel state of another terminal. In addition, the terminal performs statistical averaging on CSI-RS reception channels at the plurality of time instances, computes the covariance matrix, and feeds back first several columns of the unitary matrix that is obtained following Eigen decomposition of the covariance matrix. In a case of maximizing reuse of an NR standard design, the network device is enabled to obtain transmission directions of both a target channel and an interference channel, so that a satellite designs more robust multi-terminal low-interference transmission weights, thereby improving a capacity of a single satellite as compared with a conventional satellite solution.

In this implementation, an NR standard procedure and a Type II codebook design are reused to a maximum extent, but a multiplexing relationship between the first half of ports and the second half of ports in an NR codebook is canceled, so that the terminal can flexibly select a port based on an actual status of the port coefficient to perform feedback, thereby better matching a design solution and an NTN channel environment.

According to the communication method provided in embodiments of this application, the network device pairs a plurality of terminals based on weight vectors corresponding to main transmission directions of the plurality of terminals, configures a matrix of a group of shared reference signal weights for the paired terminals, and sends a reference signal to the paired terminals on a reference signal port group at the plurality of time instances based on the reference signal weight matrix, thereby implementing channel measurement for an NTN network and improving robustness of the channel measurement.

It may be understood that, in the foregoing embodiments, the method and/or step implemented by the terminal may alternatively be implemented by a component (such as a chip or a circuit) that can be used in the terminal, and the method and/or step implemented by the network device may alternatively be implemented by a component (such as a chip or a circuit) that can be used in the network device.

The foregoing mainly describes the solutions provided in embodiments of this application from a perspective of interaction between nodes. Accordingly, an embodiment of this application further provides a communication apparatus, and the communication apparatus is configured to implement the foregoing methods. The communication apparatus may be the terminal in the foregoing method embodiment, or may be a component that can be used in the terminal; or the communication apparatus may be the network device in the foregoing method embodiment, or may be a component that can be used in the network device. It may be understood that, to implement the foregoing functions, the communication apparatus includes a corresponding hardware structure and/or a software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that

**EP 4 761 192 A1**

the implementation goes beyond the scope of this application.

In embodiments of this application, the communication apparatus may be divided into functional modules based on the foregoing method embodiment. For example, each functional module may be obtained through division based on each corresponding function, or two or more functions may be integrated into one processing unit. The integrated module may be implemented in a form of hardware, or may be implemented in a form of a software functional module. It should be noted that, in embodiments of this application, division of the modules is an example, and is merely logical function division. During actual implementation, there may be another division manner.

Based on the same concept of the foregoing communication method, this application further provides the following communication apparatuses.

FIG. 11 is a diagram of a structure of a communication apparatus according to an embodiment of this application. The communication apparatus 1100 includes a transceiver unit 1101 and a processing unit 1102.

When the communication apparatus is configured to implement functions of the terminal in the foregoing method embodiment, the transceiver unit 1101 is configured to perform operations of the terminal in S703 and S704 in the embodiment shown in FIG. 7.

When the communication apparatus is configured to implement functions of the network device in the foregoing method embodiment, the transceiver unit 1101 is configured to perform operations of the network device in S703 and S704 in the embodiment shown in FIG. 7, and the processing unit 1102 is configured to perform operations in S701 and S702 in the embodiment shown in FIG. 7.

For specific implementation of the transceiver unit 1101 and the processing unit 1102, refer to descriptions in the foregoing method embodiment.

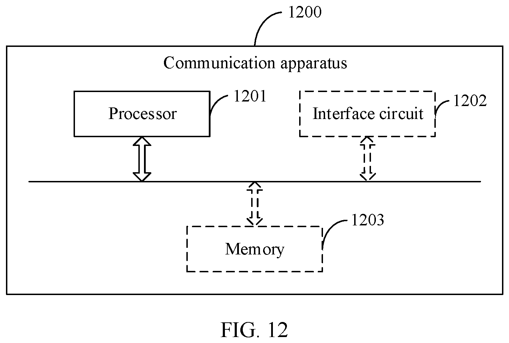

FIG. 12 is a diagram of a structure of another communication apparatus according to an embodiment of this application. The communication apparatus 1200 includes one or more processors 1201 (where one processor is used as an example in the figure). Optionally, the communication apparatus 1200 may further include a memory 1203 (represented by dashed lines in the figure). The memory 1203 is configured to store instructions to be executed by the processor 1201, store input data needed by the processor 1201 to run the instructions, or store data generated after the processor 1201 runs the instructions. Optionally, the communication apparatus 1200 may further include an interface circuit 1202 (represented by dashed lines in the figure), and the processor 1201 and the interface circuit 1202 are coupled to each other. It may be understood that the interface circuit 1202 may be a transceiver or an input/output interface. The processor 1201 is configured to implement functions of the processing unit 1102 in the embodiment shown in FIG. 11, and the interface circuit 1202 is configured to implement functions of the transceiver unit 1101 in the embodiment shown in FIG. 11.

When the communication apparatus is a chip used in a terminal, the chip implements functions of the terminal in the foregoing method embodiment. The chip receives information from another module (for example, a radio frequency module or an antenna) in the terminal, where the information is sent by a network device to the terminal; or the chip sends information to another module (for example, a radio frequency module or an antenna) in the terminal, where the information is sent by the terminal to the network device.

When the communication apparatus is a chip used in a network device, the chip implements functions of the network device in the foregoing method embodiment. The chip receives information from another module (for example, a radio frequency module or an antenna) in the network device, where the information is sent by a terminal to the network device; or the chip sends information to another module (for example, a radio frequency module or an antenna) in the network device, where the information is sent by the network device to a terminal.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this application, division of the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any

18

regular processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

When the foregoing communication apparatus is a module used in a base station, the module in the base station implements a function of the base station in the foregoing method embodiment. The module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip of the base station, a CU, a DU, or another module, or may be an apparatus in an open radio access network (open radio access network, O-RAN) architecture, for example, an apparatus such as an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, a discrete hardware component, or all or a part of circuits configured to implement a processing function in the foregoing device, and may implement or perform the methods, steps, and logical block diagrams disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

When the foregoing unit or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include the chip and another discrete device. This is not specifically limited in this embodiment of this application.

Alternatively, the memory in this application may be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It should be understood that unless otherwise specified, "/" in descriptions of this application indicates an "or" relationship between associated objects. For example, A/B may indicate A or B, where A and B may be singular or plural. In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being preferred to or having more advantages than another embodiment or design scheme. Exactly, use of the terms such as "example" or "for example" is intended to present a related concept in a specific manner for ease of understanding.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, network device, or data center to another website, computer, network device, or data center in a wired (for example, a coaxial cable, an optical fiber, or a digital subscriber line (DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not intended to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and removed based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

**Claims**

1. A communication method, applied to a first terminal or a chip in the first terminal, comprising:
   receiving a reference signal on a reference signal port group at a plurality of time instances based on a reference signal weight matrix corresponding to the reference signal port group, wherein the first terminal is any one of K terminals, the K terminals are grouped into a same group based on weight vectors corresponding to main transmission directions of the K terminals, the K terminals use a same reference signal port number group, K is a positive integer greater than or equal to 2, the reference signal weight matrix comprises K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K.

2. The method according to claim 1, further comprising:
   transmitting, by the first terminal, a channel measurement result, wherein the channel measurement result is based on a statistical average value of an equivalent channel at the plurality of time instances, and the equivalent channel is a channel estimated based on the reference signal.

3. The method according to claim 1 or 2, wherein correlation of the weight vectors corresponding to the main transmission directions of the K terminals is less than or equal to a first threshold; and/or

   isolation of the weight vectors corresponding to the main transmission directions of the K terminals is greater than or equal to a second threshold; and/or
   an interval between transmission angles of the main transmission directions of the K terminals is greater than or equal to a third threshold.

4. The method according to any one of claims 1 to 3, wherein an equivalent channel of the $i^{th}$ terminal is associated with a first parameter, the first parameter is associated with the reference signal weight matrix and an array steering vector corresponding to a transmission direction, and the first parameter remains unchanged in the plurality of time instances.

5. The method according to any one of claims 1 to 4, wherein the statistical average value is a covariance matrix, the channel measurement result comprises amplitudes and phases of a plurality of elements in the covariance matrix, and values of the amplitudes of the plurality of elements are greater than or equal to a fourth threshold.

6. The method according to any one of claims 1 to 5, wherein the statistical average value is a covariance matrix, the channel measurement result comprises first $l$ columns of vectors in a characteristic unitary matrix of the covariance matrix, and a port indication vector and a quantized port coefficient of each column of vectors in the $l$ columns of vectors, $l$ is a quantity of layers of a precoding matrix used for downlink transmission, and the quantity of layers is less than or equal to a rank of the covariance matrix.

7. A communication method, applied to a network device or a chip in a network device, comprising:

grouping K terminals into a same group based on weight vectors corresponding to main transmission directions of the K terminals, wherein the K terminals use a same reference signal port number group, and K is a positive integer greater than or equal to 2;
obtaining a reference signal weight matrix corresponding to the reference signal port group, wherein the reference signal weight matrix comprises K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K; and
transmitting a reference signal to the K terminals on the reference signal port group at a plurality of time instances based on the reference signal weight matrix.

8. The method according to claim 7, further comprising:
receiving, by the network device, channel measurement results from the K terminals.

9. The method according to claim 7 or 8, wherein correlation of the weight vectors corresponding to the main transmission directions of the K terminals is less than or equal to a first threshold; and/or

isolation of the weight vectors corresponding to the main transmission directions of the K terminals is greater than or equal to a second threshold; and/or
an interval between transmission angles of the main transmission directions of the K terminals is greater than or equal to a third threshold.

10. The method according to any one of claims 7 to 9, wherein an equivalent channel of the the $i^{th}$ terminal is associated with a first parameter, the first parameter is associated with the reference signal weight matrix and an array steering vector corresponding to a transmission direction, and the first parameter remains unchanged in the plurality of time instances.

11. The method according to any one of claims 7 to 10, wherein the statistical average value is a covariance matrix, the channel measurement result comprises amplitudes and phases of a plurality of elements in the covariance matrix, and values of the amplitudes of the plurality of elements are greater than or equal to a fourth threshold.

12. The method according to any one of claims 7 to 11, wherein the statistical average value is a covariance matrix, the channel measurement result comprises first $l$ columns of vectors in a characteristic unitary matrix of the covariance matrix, and a port indication vector and a quantized port coefficient of each column of vectors in the $l$ columns of vectors, $l$ is a quantity of layers of a precoding matrix used for downlink transmission, and the quantity of layers is less than or equal to a rank of the covariance matrix.

13. A communication apparatus, wherein the apparatus comprises a transceiver unit; and the transceiver unit is configured to receive a reference signal on a reference signal port group at a plurality of time instances based on a reference signal weight matrix corresponding to the reference signal port group, wherein the first terminal is any one of K terminals, the K terminals are grouped into a same group based on weight vectors corresponding to main transmission directions of the K terminals, the K terminals use a same reference signal port number group, K is a positive integer greater than or equal to 2, the reference signal weight matrix comprises K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K.

14. The apparatus according to claim 13, wherein the transceiver unit is further configured to transmit a channel measurement result, the channel measurement result is based on a statistical average value of an equivalent channel at the plurality of time instances, and the equivalent channel is a channel estimated based on the reference signal.

15. The apparatus according to claim 13 or 14, wherein correlation of the weight vectors corresponding to the main transmission directions of the K terminals is less than or equal to a first threshold; and/or

isolation of the weight vectors corresponding to the main transmission directions of the K terminals is greater than or equal to a second threshold; and/or
an interval between transmission angles of the main transmission directions of the K terminals is greater than or equal to a third threshold.

16. The apparatus according to any one of claims 13 to 15, wherein an equivalent channel of the $i^{th}$ terminal is associated with a first parameter, the first parameter is associated with the reference signal weight matrix and an array steering vector corresponding to a transmission direction, and the first parameter remains unchanged in the plurality of time instances.

17. The apparatus according to any one of claims 13 to 16, wherein the statistical average value is a covariance matrix, the channel measurement result comprises amplitudes and phases of a plurality of elements in the covariance matrix, and values of the amplitudes of the plurality of elements are greater than or equal to a fourth threshold.

18. The apparatus according to any one of claims 13 to 17, wherein the statistical average value is a covariance matrix, the channel measurement result comprises first $l'$ columns of vectors in a characteristic unitary matrix of the covariance matrix, and a port indication vector and a quantized port coefficient of each column of vectors in the $l'$ columns of vectors, $l'$ is a quantity of layers of a precoding matrix used for downlink transmission, and the quantity of layers is less than or equal to a rank of the covariance matrix.

19. A communication apparatus, wherein the apparatus comprises a processing unit and a transceiver unit;

the processing unit is configured to group K terminals into a same group based on weight vectors corresponding to main transmission directions of the K terminals, wherein the K terminals use a same reference signal port number group, and K is a positive integer greater than or equal to 2;
the processing unit is further configured to obtain a reference signal weight matrix corresponding to the reference signal port group, wherein the reference signal weight matrix comprises K reference signal weight vectors, each reference signal port corresponds to one reference signal weight vector, a reference signal weight vector corresponding to an $i^{th}$ reference signal port is equal to a weight vector corresponding to a main transmission direction of an $i^{th}$ terminal, and i is a positive integer less than or equal to K; and
the transceiver unit is configured to transmit a reference signal to the K terminals on the reference signal port group at a plurality of time instances based on the reference signal weight matrix.

20. The apparatus according to claim 19, wherein the transceiver unit is further configured to receive channel measurement results from the K terminals.

21. The apparatus according to claim 19 or 20, wherein correlation of the weight vectors corresponding to the main transmission directions of the K terminals is less than or equal to a first threshold; and/or

isolation of the weight vectors corresponding to the main transmission directions of the K terminals is greater than or equal to a second threshold; and/or
an interval between transmission angles of the main transmission directions of the K terminals is greater than or equal to a third threshold.

22. The apparatus according to any one of claims 19 to 21, wherein an equivalent channel of the $i^{th}$ terminal is associated with a first parameter, the first parameter is associated with the reference signal weight matrix and an array steering vector corresponding to a transmission direction, and the first parameter remains unchanged in the plurality of time instances.

23. The apparatus according to any one of claims 19 to 22, wherein the statistical average value is a covariance matrix, the channel measurement result comprises amplitudes and phases of a plurality of elements in the covariance matrix, and values of the amplitudes of the plurality of elements are greater than or equal to a fourth threshold.

24. The apparatus according to any one of claims 19 to 23, wherein the statistical average value is a covariance matrix, the channel measurement result comprises first $l'$ columns of vectors in a characteristic unitary matrix of the covariance matrix, and a port indication vector and a quantized port coefficient of each column of vectors in the $l'$ columns of vectors, $l'$ is a quantity of layers of a precoding matrix used for downlink transmission, and the quantity of layers is less than or equal to a rank of the covariance matrix.

25. A communication apparatus, comprising a memory, a processor, and a computer program that is stored in the memory and is runnable run on the processor, wherein when the processor executes the computer program, the method according to any one of claims 1 to 12 is implemented.

26. A communication system, comprising a first communication apparatus and a second communication apparatus, wherein the first communication apparatus is configured to perform the method according to any one of claims 1 to 6, and the second communication apparatus is configured to perform the method according to any one of claims 7 to 12.

27. A chip, wherein the chip is configured to perform the method according to any one of claims 1 to 12.

28. A chip module, comprising an interface component and a chip, wherein the chip is configured to perform the method according to any one of claims 1 to 12.

29. A computer-readable storage medium, wherein the storage medium stores a computer program or instructions, and when the computer program or the instructions are executed by a communication apparatus, the method according to any one of claims 1 to 12 is implemented.

30. A computer program product, wherein the computer program product comprises related program instructions, and when the related program instructions are executed, the method according to any one of claims 1 to 12 is implemented.

FIG. 1

FIG. 2A

Satellite or uncrewed
aerial vehicle platform

Satellite or unmanned
aerial vehicle platform

Inter-satellite link

Feeder link

Feeder link

Service link

Data
network

Gateway

FIG. 2B

NTN satellite

Narrow beam

GPS

FIG. 3

Multipath direction
basically consistent

600 to
36000 km

Scatterer

FIG. 4

FIG. 5

FIG. 6

K terminals

| Terminal 1 | Terminal 2 | ... | Terminal K |

Network device

S701: Group K terminals into a same group based on weight vectors corresponding to main transmission directions of the K terminals

S702: Obtain a reference signal weight matrix corresponding to a reference signal port group

S703: Send a reference signal to the K terminals on the reference signal port group at a plurality of moments based on the reference signal weight matrix

S704: Channel measurement result (The channel measurement result is based on a statistical average value of equivalent channels at the plurality of moments)

FIG. 7

Terminal 1   Terminal 2   Terminal 4
Terminal 3

FIG. 8

EP 4 761 192 A1

S901: The network device
determines paired terminals
based on angle prior information

S906: The network device
computes weights of a
plurality of terminals

Network
device

t₁   t₂            t_N

S902: The network device
computes CSI-RS weight
vectors of the paired terminals

S907: The network
device and the
terminal perform
data transmission
based on the
computed weights
of the plurality of
terminals

S905: The
terminal feeds
back the
statistical
covariance to the
network device

Send a CSI-RS     Send a CSI-RS

...

Terminal

S904: The terminal measures the CSI-RSs
and computes a statistical covariance

FIG. 9

Select paired terminals based on angle prior information

The paired terminals form a CSI-RS multi-port weight matrix

A single terminal feeds back a channel covariance

Design weights of the paired terminals

FIG. 10

1100

Communication apparatus

1101

Transceiver unit

1102

Processing unit

FIG. 11

1200

Communication apparatus

Processor 1201

Interface circuit 1202

Memory 1203

FIG. 12

## INTERNATIONAL SEARCH REPORT

| International application No. |
| --- |
| **PCT/CN2024/114061** |

| A. | CLASSIFICATION OF SUBJECT MATTER |
| --- | --- |

H04L 25/02(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, VEN, ENTXT, ENTXTC, 3GPP, CJFD, IEEE: 端口号, 参考信号, 组, 权值, 矩阵, 终端, 共享, 向量, 主传输, CSI, RS, port, number, group, weight, matrix, UE, share, vector, transmission

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115694758 A (HUAWEI TECHNOLOGIES CO., LTD.) 03 February 2023 (2023-02-03) entire document | 1-30 |
| A | CN 107196749 A (SHANGHAI HUAWEI TECHNOLOGIES CO., LTD.) 22 September 2017 (2017-09-22) entire document | 1-30 |
| A | US 2022094412 A1 (HUAWEI TECHNOLOGIES CO., LTD.) 24 March 2022 (2022-03-24) entire document | 1-30 |

☐ Further documents are listed in the continuation of Box C.　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 October 2024** | **24 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
**Information on patent family members**

International application No.

**PCT/CN2024/114061**

| Patent document cited in search report | | | Publication date (day/month/year) | Patent family member(s) | | | Publication date (day/month/year) |
|---|---|---|---|---|---|---|---|
| CN | 115694758 | A | 03 February 2023 | None | | | |
| CN | 107196749 | A | 22 September 2017 | WO | 2015101109 | A1 | 09 July 2015 |
| US | 2022094412 | A1 | 24 March 2022 | US | 12015464 | B2 | 18 June 2024 |
| | | | | WO | 2020244368 | A1 | 10 December 2020 |
| | | | | EP | 3968533 | A1 | 16 March 2022 |
| | | | | EP | 3968533 | A4 | 06 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311294651